# EUROPÄISCHE PATENTANMELDUNG

(11) **EP 0 582 878 A1**
(43) Veröffentlichungstag der Anmeldung: **16.02.1994**
(21) Anmeldenummer: 93111806.1
(22) Anmeldetag: 23.07.1993
(51) Int. Cl.: H04B 10/18, H04B 1/62

(54) **Schaltungsanordnung zur Kompensation nichtlinearer Verzerrungen in einem Übertragungssystem**

(30) Priorität: 11.08.1992 DE 4226493
(71) Anmelder: Alcatel SEL Aktiengesellschaft, D-70435 Stuttgart (DE)
(72) Erfinder: Steigenberger, Ulrich, D-70565 Stuttgart (DE)
(74) Vertreter: Schätzle, Albin, Dipl.-Phys.

(57) **Zusammenfassung**

Beschrieben wird Schaltungsanordnung zur Kompensation nichtlinearer Verzerrungen in einem Übetragungssystem, die einem zu übertragenden Nutzsignal durch eine elektrische oder optische Komponente überlagert werden, die eine im Signalweg des Nutzsignals angeordnete Verzerrereinheit aufweist, welche dem Nutzsignal eine nichtlineare Verzerrung überlagert, die in Gegenphase zu dem von der elektrischen oder optischen Komponente erzeugten nichtlinearen Nutzsignal-Verzerrungen ist und in ihrem Betrag mit dieser übereinstimmt. Außerdem ist vorgesehen, daß die Verzerrereinheit eine Verzerrerstufe und ein Phasen-Anpassungsglied aufweist, und wobei die der nichtlinearen Nutzsignalverzerrung entgegewirkenden nichtlinearen Verzerrung im wesentlichen durch ein einziges Halbleiterbauelement der Verzerrerstufe erzeugt wird.

## Beschreibung

Die Erfindung betrifft eine Schaltungsanordnung zur Kompensation nichtlinearer Verzerrungen in einem Übertragungssystem, die einem zu übertragenden Nutzsignal durch eine elektrische oder optische Komponente des Übetragungssystems überlagert werden.

Ein derartiges Übertragungssystem ist bekannt. Es wird bspw. als CATV-Vielkanal-Übertragungssystem benutzt, bei dem der Treiberverstärker ein zu übertragendes amplitudenmoduliertes Vielkanal-Summensignal direkt auf eine optsiche Komponente - eine Analog-DFB-Laserdiode - intensitätsmoduliert. Bei der Umsetzung des modulierten Nutzsignals in das in die optische Übertragungsstrecke einzuspeisende Laserlicht wird diesem eine nichtlineare Verzerrung, nämlich ein frequenzabhängiges Klirren überlagert, das durch die Nichtlinearität der P/I-Kennlinie der Analog-DFB-Laserdiode hervorgerufen wird.
Das Klirren wird hierbei im wesentlichen von den Beiträgen zweiter Ordnung dominiert, welche bis zu 15dB und mehr gegenüberden Nichtlinearitäten dritter und höherer Ordnung überwiegen. Diese frequenzabhängigen Klirrprodukte zweiter Ordnung nehmen bei DFB-Lasern u.a. aufgrund der Laser-Relaxations-Eigenresonanz mit steigender Frequenz zu und können z.B. bei einem 450 MHz breiten Vielkanal-Übertragungssystem am oberen Bandende bis zu 10dB und mehr größer sein als am unteren.

Das dem Nutzsignal überlagerte Klirren zweiter Ordnung bringt in besonders nachteiliger Art und Weise mit sich, daß der bei den bekannten Vielkanal-Übertragungssystemen erreichbare Kanalmodulationsgrad beträchtlich unter dem durch die Clipping-Grenze bestimmten theoretisch erreichbaren Maximum bleibt, was mit einer erheblichen Reduktion der maximal erzielbaren Reichweite des Vielkanal-Übertragungssystems verbunden ist.

Aus der DE-PS 33 38 797 ist eine Schaltungsanordnung zum Kompensieren von nichtlinearen Verzerrungen in einem Übertragungssystem bekannt, bei dem unter Verwendung eines nichtlinearen Verzerrers Verzerrungsprodukte erzeugt werden, die eine zur Kompensation der nichtlinearen Verzerrungen geeignete Phasenlage aufweisen. Hierzu ist vorgesehen, daß in den Signalweg ein Vier-Tor-Koppler geschaltet ist, dessen erstes Tor den Eingang der Schaltungsanordnung bildet. Ein zweites Tor des Vier-Tor-Kopplers ist derart abgeschlossen, daß es den an ihm auftretenden Signalanteil reflektiert. Eine dem dritten Tor zugeordnete Abschlußimpetanz enthält einen nichtlinearen Verzerrer. Ein viertes Tor des Vier-Tor-Kopplers bildet den Ausgang der Schaltungsanordnung, dem der vom zweiten Tor reflektierte signalanteil und die vom nichtlinearen Verzerrer erzeugten Verzerrungsprodukte zugeführt werden, wobei die Phasenlage zwischen dem Signalanteil und den Verzerrungsprodukten einstellbar ist. Nachteilig an dieser bekannten Schaltungsanordnung ist, daß sie zur Kompensation des im Sender des Übertragungssystems, also im letzten Glied des senderseitigen Signalwegs, entstehenden Klirrens nicht einsetzbar ist: Die beschriebene Schaltungsanordnung erlaubt nämlich nur die Elementation von in vorgeschalteten Bauteilen des Übertragungssystems bereits entstandenen Verzerrungen.

Aus der DE-PS 38 20 985 ist ein Verfahren und eine Anordnung zum Kompensieren der Intermodulationsverzerrungen in Funksystemen bekannt. Hierbei ist vorgesehen, daß die reale Sendeleistung des Senders detektiert wird und bei positiver Abweichung der detektierten Sendeleistung von der Nennsendeleistung die Verstärkung eines einem Intermodulations-Entzerrer vorgeschalteten Regelverstärkers hochgeregelt und bei negativer Sendeleistung-Abweichung die Verstärkung des Regelverstärkers heruntergeregelt wird. Außerdem wird die Verstärkung eines dem Intermodulations-Entzerrer nachgeschalteten Regelverstärkers umgekehrt proportional zu der Verstärkung des dem Intermodulations-Entzerrer vorgeschalteten Regelverstärkers geändert. Nachteilig daran ist, daß die Verstärkung des Sendesignal-Leistungsverstärkers nicht konstant gehalten wird, wodurch Reichweiteschwankungen des übertragenen Signals auftreten. Derartige Reichweiteschwankungen sind aber in einem optischen Übertragungssystem nicht tolerabel, da stets garantiert sein muß, daß das vom Sender ausgestrahlte Laserlicht sicher und zuverlässig über die optische Übertragungsstrecke auch die Empfängerstationen erreicht. Die beschriebene Anordnung ist somit nur für Funkübertragungssysteme, nicht aber für optische oder elektrische Übertragungssysteme in geschlossenen Übertragungsstrecken einsetzbar.

Aus der DE-OS 39 36 618 ist eine Linearisier-Steueranordnung bekannt, bei der eine Filter/Probenehmer-Anordnung das erwünschte Grundfrequenzsignal und dessen zweite Harmonische abtastet. Eine Steuerschaltung bildet das Verhältnis der Amplitude der zweiten Harmonischen dividiert durch die Amplitude des Grundfrequenzsignals und steuert einen Linearisierer zur steuerbaren Vorverzerrung derart, daß das Verhältnis zwischen diesen beiden Frequenzen minimiert wird. Auch diese bekannte Anordnung besitzt den Nachteil, daß sie nur die Reduktion von bereits im vorgeschalteten Signalweg entstandenen Verzerrungen ermöglicht, aber nicht das Entstehen von Verzerrungen in nachgeschalteten Bauteilen verhindert. Sie ist daher ebenfalls zur Klirrkompensation eines als letztes Bauteil des senderseitigen Übertragungssystems angeordneten elektrischen oder optischen Senders nicht geeignet.

Die Erfindung stellt sich daher die Aufgabe, eine Schaltungsanordnung der eingangs genannten Art dahingehend zu verbessern, daß das dem Nutzsignal überlagerte Klirren zweiter Ordnung einfach und effizient kompensiert wird.

Diese Aufgabe wird erfindungsgemäß durch die im Anspruch 1 enthaltenen Merkmale gelöst.

Erfindungsgemäß ist also vorgesehen, daß die der Nutzsignal-Verzerrung entgegenwirkende nichtlineare Verzerrung im wesentlichen durch ein einziges Halbleiterbauelement der Verzerrerstufe erzeugt wird, und daß diese Verzerrung in einem der Verzerrerstufe nachgeschalteten Phasen-Anpassungsglied in Gegenphase zu der Nutzsignal-Verzerrung gebracht wird. Die Erzeugung der den nichtlinearen Nutzsignal-Verzerrungen entgegenwirkenden Verzerrungen durch ein einziges Halbleiterbaulement bringt in vorteilhafter Art und Weise mit sich, daß die in einem optischen oder elektrischen Übertragungssystem auftretenden nichtlinearen Nutsignal-Verzerrungen nicht nur effizient, sondern in vorteilhafter Art und Weise besonders einfach zu reduzieren oder zu eliminieren sind.

Eine vorteilhafte Weiterbildung der Erfindung sieht vor, daß das Halbleiterbauelement der Verzerrerstufe eine Eingangskennlinie aufweist, die zur P/I-Kennlinie der die Nutzsignal-Verzerrung erzeugenden Komponente komplementär ist. Es ist also vorteilhafterweise vorgesehen, daß die nichtlinearen Verzerrungen, die durch die Rechtskrümmung der P/I-Kennlinie eine Analog-DFB-Laserdiode hervorgerufen werden, dadurch kompensiert werden, daß als Halbleiterbauelement der Verzerrerstufe ein GaAs-Feldeffekttransistor, welcher eine rechtsgekrümmte Eingangskennlinie aufweist, verwendet wird. Durch eine derartige Anpassung des Typs des Halbleiterbauelements der Verzerrerstufe an die durch die elektrische oder optische Komponente vorgegebene P/I-Kennlinie wird in besonders einfacher Art und Weise ein effiziente Kompensation der nichtlinearen Verzerrungen des Nutzsignals erreicht.

Eine weitere vorteilhafte Weiterbildung der Erfindung sieht vor, daß das Halbleiterbauelement mit einem Verstärkungsfaktor von eins betrieben wird. Diese Maßnahme besitzt den Vorteil, daß aufgrund dieses Verstärkungsfaktors das Halbleiterbauelement in einer beliebigen Position im Signalweg des Nutzsignals eingesetzt werden kann.

Eine weitere vorteilhafte Weiterbildung der Erfindung sieht vor, daß ein den Signalpegel des Nutzsignals frequenzunabhängig oder frequenzabhängig veränderndes erstes Stellelement vor der Verzerrerstufe angeordnet ist, und daß der Verzerrerstufe ein den Signalpegel des Nutzsignals frequenzunabhängig oder invers frequenzabhängig veränderndes zweites Stellelement nachgeschaltet ist. Durch diese Maßnahme wird in vorteilhafter Art und Weise eine vom Verzerrungsgrad des Nutzsignals unabhängige Gesamtdämpfung desselben erreicht, so daß ein konstanter Kanalmodulationsgrad erzielbar ist.

Weitere vorteilhafte Weiterbildungen der Erfindung ergeben sich aus den Unteransprüchen.

Weitere Einzelheiten der Erfindung sind den Ausführungsbeispielen zu entnehmen, die im folgenden anhand der Zeichnung beschrieben werden. Es zeigt:

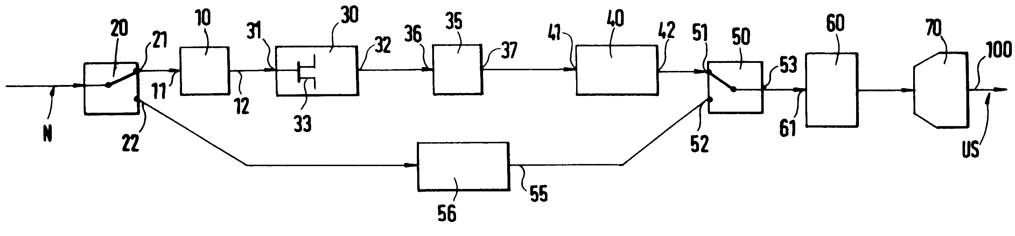

- Figur 1: ein Ausführungsbeispiel der Schaltungsanordnung.

Das in Figur 1 dargestellte erste Ausführungsbeispiel einer Schaltungsanordnung zur Kompensation des Klirrens zweiter Ordnung einer Analog-DFB-Laserdiode 70 zeigt ein erstes Stellelement 10, dessen Eingang 11 über einen ersten Schalter 20 ein analoges Nutzsignal N zugeführt wird. Ein Ausgang 12 des ersten Stellelements 10 ist einem Eingang 31 einer Verzerrerstufe 30 verbunden. An einem Ausgang 32 der Verzerrerstufe 30 ist ein Eingang 36 eines zweiten Stellelements 35 angeschlossen. An dessen Ausgang 37 liegt ein Eingang 41 eines Phasen-Anpassungsglieds 40 an, dessen Ausgang 42 mit einem ersten Eingang 51 eines zweiten Schalters 50 in Verbindung steht. Ein zweiter Eingang 52 des zweiten Schalters 50 ist über eine Leitung 55 mit einem Dämpfungsglied 56 mit einem zweiten Ausgang 22 des ersten Schalters 20 verbunden. Durch diese Verbindung des ersten Schalters 20 mit dem zweiten Schalter 50 wird erreicht, daß wahlweise die Verzerrerstufe 30 und das Phasen-Anpassungsglied 40 überbrückt werden kann. Das Dämpfungsglied 56 dient zur Pegelanpassung des Nutzsignals N, so daß an den beiden Eingängen 51 und 52 des zweiten Schalters 50 stets pegelgleiche Signale auftreten. Ein Ausgang 53 des zweiten Schalters 50 ist mit einem Eingang 61 eines Gegentakt-AB-Treiberverstärkers 60 verbunden. Dieser ist wiederum mit einer Analog-DFB-Laserdiode 70 verbunden, die das Nutzsignal N in ein in eine Übertragsstrecke 100 einzuspeisendes Übertragungssignal US umsetzt. Diese optische Komponente des Übertragssystems überlagert hierbei dem Nutzsignal N eine nichtlineare Verzerrung, nämlich im wesentlichen ein Klirren zweiter Ordnung.

In der Verzerrerstufe 30 findet bei der Klirrkompensation einer DFB-Laserdiode vorteilhafterweise ein GaAs-Feldeffekttransistor 33 Verwendung, da dieser eine linksgekrümmte quadratische Eingangskennlinie aufweist, welche im wesentlichen zur rechtsgekrümmten P/I-Kennlinie der Analog-DFB-Laserdiode 70 komplementär ist.

Bei der beschriebenen Ausbildung der Verzerrerstufe 30 mit einem GaAs-Feldeffekttransistor 33 stehen dann drei Freiheitsgrade zur Verfügung, durch deren Variation das von der Verzerrerstufe 30 erzeugte Verzerrer-Klirren zweiter Ordnung dem Laser-Klirren angepaßt werden kann. Zum ersten wird das Klirren der Verzerrerstufe 30 vom Typ des Feldeffekttransistors 33 selbst beeinflußt. Zum zweiten bestimmt der gewählte Arbeitspunkt des Feldeffekttransistors 33 wesentlich das Klirren der Verzerrerstufe 30 mit. Und zum dritten ist das Verzerrer-Klirren vom Pegel des dem Feldeffekttransistors 33 zugeführten Nutzsignals N abhängig. Durch eine geeignete Variation dieser drei Stellgrößen ist es in Verbindung mit dem Phasen-Anpassungglied 40 somit besonders einfach möglich, das Verzerrer-Klirren derart zu modifizieren, daß es in Betrag und Phase zum Laser-Klirren der Analog-DFB-Laserdiode 70 entgegengerichtet ist.

Es ist also in besonders vorteilhafter Art und Weise vorgesehen, daß das dem Laser-Klirren entgegenwirkende Verzerrer-Klirren im wesentlichen durch den GaAs-Feldeffekttransistor 33 der Verzerrerstufe 30 erzeugt wird. Durch die Verwendung eines einzigen Halbleiterbauelements zur Kompensation der im Übertragungssystem auftretenden, durch die optische Komponente Analog-DFB-Laserdiode 70 hervorgerufenen nichtlinearen Verzerrungen sind diese nicht nur effizient, sondern auch in vorteilhafter Art und Weise besonders einfach zu reduzieren oder zu eliminieren.

Zur Regelung des Verzerrer-Klirrens ist vorgesehen, daß das erste Stellelement 10 der durch die beiden Stellelemente 10 und 35 und die Verzerrerstufe 30 gebildeten Verzerrereinheit den Eingangspegel des Nutzsignals N derart erhöht oder erniedrigt, daß das vom Feldeffekttransistor 33 der Verzerrerstufe 30 erzeugte Klirren zweiter Ordnung das von der Analog-DFB-Laserdiode 60 erzeugte Laser-Klirren kompensiert. Ist das Laser-Klirren - wie bei einer Analog-DFB-Laserdiode - auch von der Frequenz des zugeführten Nutzsignals N abhängig, so muß zusätzlich vorgesehen sein, daß die Veränderung des Eingangspegels des Nutzsignals N durch das erste Stellelement 10 ebenfalls frequenzabhängig ist, so daß das erzeugte Verzerrer-Klirren und das inhärente Sender-(Laser)-Klirren sich im wesentlichen über das gesamte interessierende Frequenzspektrum kompensieren.

Weist der Sender hingegen keine Frequenzabhängigkeit im Sender-Klirren zweiter Ordnung auf oder ist es ausreichend, bei einem frequenzabhängigen Sender-Klirren nur den frequenzflachen Anteil zu eliminieren, so ist es ausreichend, eine über den gesamten Frequenzbereich hinweg konstante, also frequenzunabhängige Pegelveränderung des Nutzsignals N durchzuführen.

Das zweite Stellelement 35 wirkt der Veränderung des Eingangspegels des Nutzsignals N durch das erste Stellelement 10 genau (frequenzmäßig) entgegen und addiert eine weitere Dämpfung zu einem Gesamtdämpfungswert, der vom Verzerrungsgrad unabhängigig ist, so daß am Ausgang des zweiten Stellelements 35 die gleichen Pegelverhältnisse des Nutzsignals N wie am zweiten Eingang 52 des zweiten Schalters 50 auftreten. Damit wird eine konstante Einfügedämpfung der Verzerrereinheit erreicht, die unabhängig vom Eingangspegel des Nutzsignals N in die Verzerrerstufe 30 ist.

Eine Alternative hierzu, welche sich durch ihren geringeren Aufwand an Bauelementen und durch ihre einfachere Justage auszeichnet, ist wie folgt:
Der GaAs-Feldeffekttransistor 33 der Verzerrerstufe 30 wird in Übereinstimmung mit der Analog-DFB-Laserdiode 70 derart gewählt, daß sich diese beiden Elemente des Übertragungssystems in ihrem Klirrverhalten zweiter Ordnung möglichst gut entsprechen: Analog-DFB-Laserdioden 70 mit relativ guter Linearität zweiter Ordnung benötigen deshalb einen ebensolchen GaAs-Feldeffekttransistor 33, wohingegen bei Analog-DFB-Laserdioden 70 mit einer relativ schlechten Linearität zweiter Ordnung ein Feldeffekttransistor 33 verwendet wird, der relativ hohe Klirrbeiträge zweiter Ordnung liefert. Diese Maßnahme besitzt den Vorteil, daß der Grobabgleich der Verzerrerstufe 30 durch die Auswahl des Feldeffekttransistors 33 erfolgt. Zum Feinabgleich der Verzerrerstufe 30 bedarf es lediglich einer Veränderung des Arbeitspunktes des Feldeffekttransistors 33. Die beiden Stellelemente 10 und 35 entfallen bei dieser Variante teilsweise bzw. vollständig.

Um die Kompensation des Laser-Klirrens zweiter Ordnung lediglich durch eine Variation des Feldeffekttransistor-Arbeitspunktes durchführen zu können, wird die Verzerrerstufe 30 an einer Stelle des Signalwegs des Nutzsignals N angeordnet, an der der Feldeffekttransistor 33 von den Pegelverhältnissen des Nutzsignals N her noch in der Lage ist, aufgrund eines relativ geringen Eingangspegels (vorzugsweise ca. 75-85dBuV), relativ gute Werte für das Klirren zweiter Ordnung aufzuweisen (ca. 50-68dB, je nach Typ und Bias-Abgleich). Vorzugsweise ist vorgesehen, daß der Feldeffekttransistor 33 der Verzerrerstufe 30 derart betrieben wird, daß er einen Verstärkungsfaktor von eins aufweist und phaseninvertierend wirkt. Um betragsmäßig die richtigen Klirrwerte zu erreichen, ist er - wie in Figur 1 dargestellt - im Signalweg des Nutzsignals N vor dem Gegentakt-AB-Treiberverstärker 60 angeordnet und zweckmäßigerweise ein- und ausgangsseitig auf 50 bzw. 75 Ohm angepaßt.

Der Abgleich der Schaltungsanordnung zur Kompensation des Laser-Klirrens zweiter Ordnung ist nun wie folgt: In einem ersten Schritt wird das eingespeiste Nutzsignal N über die Verzerrerstufe 30 und das Phasen-Anpassungsglied 40 geleitet, indem der Eingang 21 des ersten Schalters 20 mit dessen erstem Ausgang 22 und der zweitem Eingang 52 des zweiten Schalters 50 mit dessen Ausgang 53 verbunden wird, so daß die Überbrückung der Verzerrerstufe 30 und des Phasen-Anpassungsglieds 40 aufgehoben ist. Das am Ausgang 53 auftretende Signal wird nun über einen in Figur 1 nicht näher dargestellten elektrischen Meßausgang gemessen und in einer geeigneten elektronischen Schaltung analysiert, um das von der Verzerrerstufe 30 erzeugte Verzerrer-Klirren zweiter und dritter Ordnung zu registrieren. Durch eine entsprechende frequenzabhängige bzw. frequenzunabhängige Einstellung des Eingangspegels des Nutzsignals N durch das erste Stellelement 10 und/oder durch einen Abgleich des Arbeitspunktes des Feldeffekttransistors 33 der Verzerrerstufe 30 und ggf. durch einen Typentausch des Feldeffekttransistors wird das Verzerrer-Klirren derart eingestellt, daß ein dem Laser-Klirren möglichst betragsgleiches Verzerrer-Klirren zweiter Ordnung auftritt.

Bei dieser Justage ist aber zu beachten, daß bei diesem Abgleich der Verzerrerstufe 30 keine Situation eintritt, bei der die Beiträge dritter Ordnung zum Verzerrer-Klirren ein nicht mehr tolerables Maß erreichen. Anschließend wird das nun von der Analog-DFB-Laserdiode 70 emittierte Licht in einem nicht dargestellten optischen Referenzempfänger gemessen und die Klirrbeiträge zweiter und dritter Ordnung werden registriert.

In einem zweiten Schritt wird das der Verzerrerstufe 30 nachgeschaltete, als Übertrager (Phaseninverter) oder Allpaß (Phasendreher) ausgeführte Phasen-Anpassungsglied 40 aktiviert, so daß die Phasenlage des Verzerrer-Klirrens im Vergleich zum ersten Schritt invertiert (Phaseninverter) oder modifiziert (Allpaß) wird. Die im ersten Schritt beschriebenen Maßnahmen werden nochmals durchgeführt.

In einem dritten Schritt werden die Beiträge des Klirrens zweiter und dritter Ordnung bei deaktiviertem Phasen-Anpassungsglied 40 mit denen bei einem aktivierten Phasen-Anpassungsglied 40 verglichen. Die mit Blick auf eine Minimierung des Klirrens zweiter Ordnung optimalere Schaltungskonfiguration wird beibehalten.

Die beschriebene Schaltungsanordnung zur Kompensation nichtlinearer Verzerrungen ist nicht auf die oben genannte Kompensation des Klirrens zweiter Ordnung beschränkt. Vielmehr ist es auch möglich, Klirranteile dritter und höherer Ordnung einfach und effizient zu kompensieren. Beispielhafterweise wird angeführt, daß bei optisch indirekt moulierten Lasern externe Modulatoren - wie z.B. Mach-Zehnder-Interferometer verwendet werden, die eine zu kompensierende nichtlineare Verzerrung dritter Ordnung verursachen. Anstelle des oben genannten Feldeffekttransistors 33 wird dann eine Verzerrerstufe 30 verwendet, die anstelle des Feldeffekttransistors 33 ein Halbleiterbauelement - wie z.B. eine Schottky-Diode - einsetzt, bei dem ebenfalls die Nichtlinearitäten dritter Ordnung dominieren.

Abschließend ist noch anzuführen, daß die beschriebene Schaltungsanordnung nicht nur bei einem optischen Sender, wie ihn die Analog-DFB-Laserdiode 70 darstellt, einsetzbar ist. Vielmehr ist es auch möglich, die beschriebene Kompensation des Sender-Klirrens zweiter Ordnung auch bei einem elektromagnetischen Sender - z.B. einem CATV-Koaxialverstärker - einzusetzen. Dem Fachmann sind die hierfür erforderlichen Modifikationen aufgrund der obigen Beschreibung leicht ersichtlich, sodaß hier eine detaillierte Aufzählung der - lediglich minimalen - Änderungen überflüssig ist.

Desweiteren ist es möglich, die beschriebene Schaltungsanordnung im Signalweg des Nutzsignals N zu kaskadieren, so daß eine mehrstufige Kompensation des Klirrens zweiter Ordnung erreicht wird.

Es ist auch möglich, eine entsprechende Schaltungsanordnung im empfängerseitigen Teil des Übertragungssystems einzusetzen. Dem Fachmann sind die hierbei erforderlichen Modifikationen leicht ersichtlich, so daß auf eine detaillierte Beschreibung an dieser Stelle verzichtet werden kann.

## Patentansprüche

1. Schaltungsanordnung zur Kompensation nichtlinearer Verzerrungen in einem Übetragungssystem, die einem zu übertragenden Nutzsignal (N) durch eine elektrische oder optische Komponente (70) überlagert werden, bei der eine im Signalweg des Nutzsignals (N) angeordnete Verzerrereinheit (30,33,40) angeordnet ist, welche dem Nutzsignal (N) eine nichtlineare Verzerrung überlagert, die in Gegenphase zu dem von der elektrischen oder optischen Komponente (70) erzeugten nichtlinearen Nutzsignal-Verzerrungen ist und in ihrem Betrag mit dieser übereinstimmt, bei der die Verzerrereinheit eine Verzerrerstufe (30) und ein phasen-Anpassungsglied (40) aufweist, und bei der die der nichtlinearen Nutzsignal-Verzerrung entgegewirkenden nichtlinearen Verzerrungen im wesentlichen durch ein einziges Halbleiterbauelement (33) der Verzerrerstufe (30) erzeugt wird.

2. Schaltungsanordnung nach Anspruch 1, dadurch gekennzeichnet, daß das Halbleiterbauelement (33) der Verzerrerstufe (30) ein Feldeffekttransistor (33) ist, der eine Eingangskennlinie aufweist, die zur P/I-Kennlinie der die Nutzsignal-Verzerrung erzeugenden Komponente (70) komplementär ist.

3. Schaltungsanordnung nach Anspruch 2, dadurch gekennzeichnet, daß das Halbleiterbauelement (33) der Verzerrerstufe (30) als nichtlineare Verzerrung ein Klirren zweiter Ordnung erzeugt.

4. Schaltungsanordnung nach Anspruch 3, dadurch gekennzeichnet, daß das Halbleiterbauelement der Verzerrerstufe (30) ein Feldeffekttransistor (33) ist.

5. Schaltungsanordnung nach Anspruch 2, dadurch gekennzeichnet, daß das Halbleiterbauelement (33) der Verzerrerstufe (30) als nichtlineare Verzerrung ein Klirren dritter Ordnung erzeugt.

6. Schaltungsanordnung nach Anspruch 5, dadurch gekennzeichnet, daß das Halbleiterbauelement der Verzerrerstufe (30) ein Schottky-Diode ist.

7. Schaltungsanordnung nach einem der Ansprüche 1 bis 6, dadurch gekennzeichnet, daß das Halbleiterbauelement (33) der Verzerrerstufe (30) mit einem Verstärkungsfaktor von eins betrieben wird.

8. Schaltungsanordnung nach einem der Ansprüche 1 bis 7, dadurch gekennzeichnet, daß das Halbleiterbauelement der in der Verzerrereinheit (30,33,40) erzeugte Verzerrer-Klirren in Betrag und/oder Phase eine Frequenzabhängigkeit aufweist, die im wesentlichen der Frequenzabhängigkeit des von der die Nutzsignal-Verzerrung erzeugenden Komponente (60) hervorgerufenen nichtlinearen Klirrens entspricht.

9. Schaltungsanordnung nach einem der Ansprüche 1 bis 7, dadurch gekennzeichnet, daß das in der Verzerrereinheit (30,33,40) erzeugte Verzerrer-Klirren im wesentlichen unabhängig von der Frequenz des zugeführten Nutzsignals (N) ist.

10. Schaltungsanordnung nach Anspruch 2, dadurch gekennzeichnet, daß als Phasen-Anpassungsglied (40) ein Übertrager als Phaseninverter und/oder ein Allpaß verwendet wird.

11. Schaltungsanordnung nach einem der Ansprüche 1 bis 10, dadurch gekennzeichnet, daß ein den Signalpegel des Nutzsignals (N) veränderndes erstes Stellelement (10) vor der Verzerrerstufe (30) angeordnet ist, und daß der Verzerrerstufe (30) ein zweites Stellelement (35) nachgeschaltet ist, daß dem Nutzsignal (N) eine weitere Dämpfung aufaddiert, so daß am Ausgang (37) des zweiten Stellelements (35) eine vom Verzerrungsgrad unabhängige Gesamtdämpfung des Nutzsignals (N) auftritt.

12. Schaltungsanordnung nach Anspruch 11, dadurch gekennzeichnet, daß die Veränderung des Eingangspegels des Nutzsignals (N) durch das erste Stellelement (10) in Abhängigkeit von dessen Frequenz erfolgt.

13. Schaltungsanordnung nach Anspruch 11, dadurch gekennzeichnet, daß die Veränderung des Eingangspegels des Nutzsignals (N) durch das erste Stellelement (10) unabhängig von dessen Frequenz erfolgt.

14. Schaltungsanordnung nach einem der Ansprüche 11 bis 13, dadurch gekennzeichnet, daß die Verzerrereinheit (30,33,40) zwischen einem ersten Ausgang (21) eines ersten Schalters (20) und einem ersten Eingang (51) eines zweiten Schalters (50) geschaltet ist, und daß ein zweiter Ausgang (22) des ersten Schalters (20) über eine Leitung (55) und ein Dämpfungsglied (56) mit einem zweiten Eingang (52) des zweiten Schalters (50) verbunden ist.

15. Schaltungsanordnung nach einem der Ansprüche 1 bis 14, dadurch gekennzeichnet, daß der Grobabgleich des Halbleiterelements (33) der Verzerrerstufe (30) auf die die Nutzsignal-Verzerrung erzeugende Komponente (70) durch die Auswahl des Halbleiterbauelement-Typs erfolgt, derart, daß bei einer zugeordneten Komponente (70) mit einer guten Linearität ihrer P/I-Kennlinie ein Halbleiterbauelement (33) eingesetzt wird, dessen Kennlinienfeld eine gute Linearität aufweist, und daß bei einer Komponente (70) mit einer schlechten Linearität ihrer P/I-Kennlinie ein Halbleiterbauelement (33) eingesetzt wird, dessen Kennlinienfeld eine schlechte Linearität aufweist.

16. Schaltungsanordnung nach einem der Ansprüche 1 bis 15, dadurch gekennzeichnet, daß die Verzerrerstufe (30) vor einem die Komponente (70) ansteuernden Treiberverstärker (60) angeordnet ist.

17. Schaltungsanordnung nach Anspruch 6, dadurch gekennzeichnet, daß der Treiberverstärker (60) ein Gegentakt-AB-Verstärker ist.

18. Schaltungsanordnung nach, einem der Ansprüche 1 bis 17, dadurch gekennzeichnet, daß die die Nutzsignal-Verzerrung erzeugende Komponente ein optischer Sender, insbesondere eine Analog-DFB-Laserdiode (70) ist.

19. Schaltungsanordnung nach einem der Ansprüche 1 bis 18, dadurch gekennzeichnet, daß das Nutzsignal (N) ein analoges Signal ist.

20. Übertragungssystem nach einem der Ansprüche 1 bis 19, dadurch gekennzeichnet, daß im Signalweg des Nutzsignals (N) mehrere Verzerrereinheiten (30,33,40) hintereinandergeschaltet sind.

21. Übertragungssystem nach einem der Ansprüche 1 bis 20, dadurch gekennzeichnet, daß die die Nutzsignal-Verzerrung erzeugende Komponente (70) des Übertragungssystem ein elektrischer oder optischer Empfänger ist.

22. Übertragungssystem, gekennzeichnet durch die sender- und/oder empfängerseitige Verwendung einer Schaltungsanordnung nach mindestens einem der Ansprüche 1 bis 21.
